# EUROPEAN PATENT APPLICATION

(11) **EP 1 234 643 A2**
(43) Date of publication of application: **28.08.2002**
(21) Application number: 02251147.1
(22) Date of filing: 20.02.2002
(51) Int. Cl.: B25J 21/02

(54) **Containment assembly**

(30) Priority: 21.02.2001 GB 0104247
(71) Applicant: Extract Technology Limited, Huddersfield HD2 1UR (GB)
(72) Inventor: Cocker, Neil, The Mistal, Penistone, South Yorkshire S36 9FE (GB); Leach, Francis, c/o Extract Technology Limited, Huddersfield HD2 1UR (GB)
(74) Representative: Stuttard, Garry Philip

(57) **Abstract**

The present invention relates to a containment assembly (eg a down flow containment assembly) for containing powder handling equipment comprising an isolator (15) with a pivotally mounted framework (8,9) supporting part of an at least partially flexible sheet (20), and to the isolator (15) itself which is particularly useful in containing large powder handling equipment such as a centrifuge (or a part thereof).

## Description

The present invention relates to a containment assembly (*eg* a down flow containment assembly) for containing powder handling equipment comprising an isolator with a pivotally mounted framework supporting part of an at least partially flexible sheet, and to the isolator itself which is particularly useful in containing large powder handling equipment such as a centrifuge (or a part thereof).

There are a number of containment assemblies available to the user for containing large powder handling equipment (or a part thereof). One conventional containment assembly comprises an operator booth of sufficient size to admit an operator for the purposes of handling the large powder handling equipment (or a part thereof) such as a large powder keg or bin (eg a chemical or pharmaceutical keg or bin) together with (for example) a weighing device in a processing zone. The air quality in and around the processing zone may be controlled using forced ventilation. One category of forced ventilation is "down flow" in which surrounding air is pushed downwardly to entrain airborne particles to a level below the processing zone (*eg* to a level below the typical operator's breathing zone). For down flow containment, exhaust is usually carried out at low level relative to the source of powder particles. The level of containment that can be achieved is limited (typically to a level in the range 50-150µg/m³) and there is a significant risk of high localised contamination of (for example) the operator's hands or clothing which is quite unacceptable for handling pharmaceuticals or chemicals. The pharmaceutical industry is striving for the effectiveness of such containment assemblies to be improved so that the exposure level in the operator breathing zone is less than 10µg/m³.

An alternative conventional containment assembly is a large isolator with gloved access to a processing zone in which may be handled large powder handling equipment (or a part thereof). Although they provide satisfactory containment, conventional isolators offer restricted access to (and manoeuverability in) the processing zone and limit the degree to which the equipment may be moved. Also available are large isolators with half suit access to a processing zone in which may be handled large powder handling equipment (or a part thereof). Again these offer restricted access to (and manoeuverability in) the processing zone and limit the degree to which the equipment may be moved. Moreover repeated use of the suit by a number of individuals is unhygienic. Thus these alternative conventional containment assemblies relying on barrier containment have the drawback *inter alia* of limited reach and as such are restrictive during operation.

The present invention seeks to improve the operator exposure levels in a containment assembly without hindering access to (or manoeuverability in) the processing zone by providing an isolator with a pivotally mounted framework supporting a sheet of flexible material between the processing zone and the operator breathing zone. The invention may be usefully exploited in the containment of large powder handling equipment (or a part thereof) such as a centrifuge.

Thus viewed from one aspect the present invention provides a containment assembly comprising:
a powder handling apparatus; and
an isolator comprising (1) a sheet at least a first part of which (preferably substantially the whole of which) is composed of flexible material and (2) a pivotally mounted framework capable of pivoting into each position in a pivoting range between an innermost position and an outermost position, said isolator being positioned adjacent to the powder handling apparatus or a part thereof to define a processing zone beyond the sheet in which is located the powder handling apparatus or a part thereof, wherein the first part of the sheet is adapted (or is adaptable) to permit an operator outside the processing zone to reach into the processing zone, wherein the pivotally mounted framework is adapted to support the first part of the sheet at each position in the pivoting range.

It has been surprisingly found that the containment assembly of the invention may be capable of reducing operator exposure levels beyond the 10µg/m³ threshold desired by the pharmaceutical industry (typically to a level in the range 1 to 5µg/m³), whilst ensuring no localised contact with the materials being handled and raising no hygiene issues. The isolator may be installed within minutes by an unskilled operator and advantageously supplements the flexibility of the material of the first part of the sheet with an extended reach into the processing zone offered by the pivotally mounted framework.

In a preferred embodiment, the powder handling apparatus is a centrifuge containing one or more operating parts, wherein the isolator is positioned adjacent to the centrifuge to define a processing zone beyond the sheet in which is located the one or more operating parts (*eg* a centrifuge basket). In this embodiment, the isolator advantageously permits the operator to inwardly pivot the pivotally mounted framework to a position at or near to the innermost position so as to reach into an open operating part and permits the operator to outwardly pivot the pivotally mounted framework to a position at or near to the outermost position so as to give sufficient clearance for opening/closing an operating part door. For example, the operator may wish to remove powder from the open operating part or to clean the inside of the operating part and the interior face of the door.

In a preferred embodiment, the powder handling apparatus is a powder drum or keg *(eg* a large powder drum or keg). In this embodiment, the operator may use the containment assembly for the purposes of weighing out powder in a suitable weighing device.

Preferably the isolator is a framework structure comprising a plurality of frame parts. Preferably the plurality of frame parts are arranged into a walled framework structure of enclosed walls. The pivotally mounted framework may be pivotally mounted to a frame part *(eg* a vertical frame part) of a first enclosed wall. Preferably the first enclosed wall comprises a first vertical frame part (to which is mounted the pivotally mounted framework) and a second vertical frame part connected by an upper horizontal frame part and a lower horizontal frame part. Preferably the lower horizontal frame part is reentrant so as to permit the operator to adopt an effective operating position as close as possible to the powder handling apparatus (*eg* centrifuge).

In a preferred embodiment, the sheet is fixed to the frame parts of at least the first enclosed wall. For this purpose, it is preferred that the sheet is loosely fixed to the frame parts of the first enclosed wall (*ie* there is excess material to allow for pivoting of the pivotally mounted panel between the innermost and outermost position).

The walled framework structure may comprise the first enclosed wall and any number of additional enclosed walls (*ie* second and subsequent additional enclosed walls). The or each additional enclosed wall may comprise a plurality of frame parts supporting *(eg* bounding) flexible or non-flexible (*eg* rigid) material. For example, one or more additional enclosed walls may comprise a plurality of frame parts supporting flexible material adapted (or adaptable) to permit the operator outside the processing zone to operate inside the processing zone. Alternatively one or more additional enclosed walls may comprise a plurality of frame parts bounding rigid material incorporating one or more non-flexible, rapid transfer ports. Preferably the sheet is fixed to the frame parts of the first enclosed wall and to one or more of the additional enclosed walls (*eg* the sheet is continuous across the first and at least one additional wall).

Although the framework structure of the isolator may take any configuration, the isolator is preferably a walled framework structure which when positioned against the powder handling apparatus defines an enclosed processing zone.

The sheet is fixed (*eg* sealingly fixed) to the frame parts of the framework structure (*eg* to the frame parts of the first enclosed wall) in any conventional manner. Typically the edges of the sheet are reinforced (eg thickened) and fastened to a frame part of the framework structure by suitable fastening means. For example, the reinforced edge may be sealingly attached by fastening tape *(eg* by sticky tape such as double sided sticky tape) and/or by a fastening member (such as a bolt) passing through an aperture in the reinforced edge and into the frame part of the framework structure.

In a preferred embodiment, the pivotally mounted framework is pivotally mounted along a substantially vertical edge. Preferably, the pivotally mounted framework is pivotally mounted on a substantially vertical frame part of the framework structure.

In a preferred embodiment, the innermost position of the pivotally mounted framework is reentrant.

The (or each) pivotally mounted framework may comprise a planar framework (*eg* a substantially rectangular framework) of frame parts which is adapted to support the first part of the sheet at each position in the pivoting range.

In a preferred embodiment, the isolator comprises a first pivotally mounted framework capable of pivoting into each position in a first pivoting range between an innermost position and an outermost position and a second pivotally mounted framework capable of pivoting into each position in a second pivoting range between an innermost position and an outermost position, wherein each of the first pivotally mounted framework and the second pivotally mounted framework is adapted to support the first part of the sheet at each position in the first and second pivoting range respectively so as to permit extended reach into the processing zone. The presence of first and second pivotally mounted frameworks may advantageously give the operator extended and independent reach between left and right hands.

Particularly preferably, the first pivotally mounted framework and the second pivotally mounted framework are pivotal in opposite senses (*eg* the first pivotally mounted framework is capable of pivoting clockwise and the second pivotally mounted framework is capable of pivoting anticlockwise).

Particularly preferably, the first pivotally mounted framework and the second pivotally mounted framework are pivotally mounted along remote (*ie* non-adjacent) substantially vertical edges.

Particularly preferably, the innermost position of each of the first pivotally mounted framework and the second pivotally mounted framework is reentrant.

The sheet may be attached to one frame part of the pivotally mounted framework so that the pivotally mounted framework supports the flexible material of the first part of the sheet (or to substantially all of the frame parts of the framework structure so that the rigid framework bounds the flexible material of the first part of the sheet).

In a preferred embodiment, each of the first pivotally mounted framework and the second pivotally mounted framework is pivotally mounted on a first and second vertical frame part respectively, wherein said first and second vertical frame part are connected by an upper horizontal frame part and a lower horizontal frame part. Preferably the lower horizontal frame part is reentrant so as to permit the operator to adopt an effective operating position as close as possible to the powder handling apparatus (*eg* centrifuge).

In a preferred embodiment, more than the first part of the sheet is composed of flexible material. Particularly preferably, substantially the whole of the sheet is composed of flexible material to optimise the extended reach available to the operator for operating within the processing zone.

The (or each) pivotally mounted framework may be pivotally mounted in any conventional manner (*eg* using one or more suitable hinges).

In a preferred embodiment, the first part of the sheet comprises one (or more than one) flexible portion in the shape of a glove (or one (or more than one) flexible portion capable of being deformed into the shape of a glove). Particularly preferably the first part of the sheet comprises more than one flexible portion in the shape of a glove (or capable of being deformed into the shape of a glove). Typically the first part of the sheet consists of two flexible portions in the shape of a glove (or capable of being deformed into the shape of a glove).

In a preferred embodiment, the (or each) flexible portion in the shape of a glove (or capable of being deformed into the shape of a glove) comprises a flexible sleeve terminating in a gloved end. Preferably in use the flexible sleeve extends from the remaining part of the sheet to beyond the operators elbow (to optimise manoeuverability). The gloved end is typically composed of less flexible material than the flexible sleeve to ensure durability. For example, the gloved end may be composed of thicker polyurethane than that of the flexible sleeve (or alternatively of thicker PVC or other material such as latex or hypalon).

The gloved end may be attached to the flexible sleeve in any conventional manner. Preferably the joint between the gloved end and the flexible sleeve comprises an internal strengthening ring to which the ends of the gloved end and the flexible sleeve are secured. For example, the ends of the gloved end and the flexible sleeve may be secured to the internal strengthening ring by an elastic band or the like.

At the joint of the (or each) flexible portion in the shape of a glove *(eg* the flexible sleeve) and the remaining part of the framework, there may be a strengthening portion (*eg* a strengthening ring or a thickened portion of material).

Typically the size, position and orientation of the (or each) flexible portion in the shape of a glove may be tailored to suit the particular operation conducted in the processing zone.

In a preferred embodiment the sheet is detachably mounted. This advantageously permits the isolator to be used in open mode (where the sheet is removed) or in closed mode (where the sheet is installed). The interior of the isolator may be adapted to optimise air flow so that in open mode, the isolator can be used in a similar manner to a conventional down flow booth (or hood) in which airborne particles are entrained to a level below a typical operators breathing zone using conventional down flow techniques. For this purpose, the isolator may comprise a substantially closed ceiling, at or near to which is positioned means for inducing downward air flow (*eg* one or more plenums). The interior of the isolator may be adapted to optimise air flow. The interior of the isolator may exhibit a negative pressure (relative to the surroundings) so that in closed mode the isolator can be used in a similar manner to a conventional isolator to withstand leakage into the surroundings and provide high levels of containment.

Preferably the containment assembly comprises an isolator positioned adjacent to the powder handling apparatus in an operator booth of box-like configuration having a rear wall, a floor and an upper surface *(eg* a ceiling), said operator booth being of sufficient size to admit an operator, wherein the isolator is positioned in the operator booth to define a processing zone beyond the pivotally mounted framework. Preferably the operator booth is adapted at or near its lower end to transmit externally an air flow and adapted at or near to its upper end to transmit internally the air flow. The rear wall may be adapted at or near to its upper end with a ceiling through which air may be transmitted downwardly.

The containment assembly may be of the down flow type disclosed in UK Patent application number 0009295.7 (Extract Technology Limited). For example, the operator booth may be a operator booth of box-like configuration having a rear wall positioned adjacent to a modular structure, wherein the modular structure is adapted at or near to its lower end to receive the airflow from the operator booth and at or near to its upper end to transmit the airflow to the operator booth, and the rear wall of the operator booth is adapted at or near to its lower end to transmit the airflow to the modular structure; and means for inducing the airflow downwardly in the operator booth (*eg* one or more plenums).

Flexible material mentioned hereinbefore may be polyurethane, polyethylene or polyvinylchloride (PVC). In a preferred embodiment, the flexible material is polyurethane. Preferably the flexible material is sufficiently thin to be effectively transparent whilst being tough and durable. Generally speaking, the (or each) flexible portion in the shape of a glove is of thicker polyurethane or PVC, or latex or hypalon to guard against tearing.

The isolator may be fully or partially transparent. For example, the at least partially transparent flexible isolator may comprise a transparent window at or near to a typical operator's eye height (or other heights as desired).

Viewed from a further aspect the present invention provides an isolator as hereinbefore defined.

The present invention will now be described in a non-limitative sense with reference to the accompanying Figures in which:
Figures la-c illustrate schematically in plan view the use of an embodiment of the containment assembly of the invention;
Figures 2a-b illustrate schematically a side view of an embodiment of a containment assembly of the invention; and
Figure 3 illustrates a front view of an embodiment of the isolator of the invention.

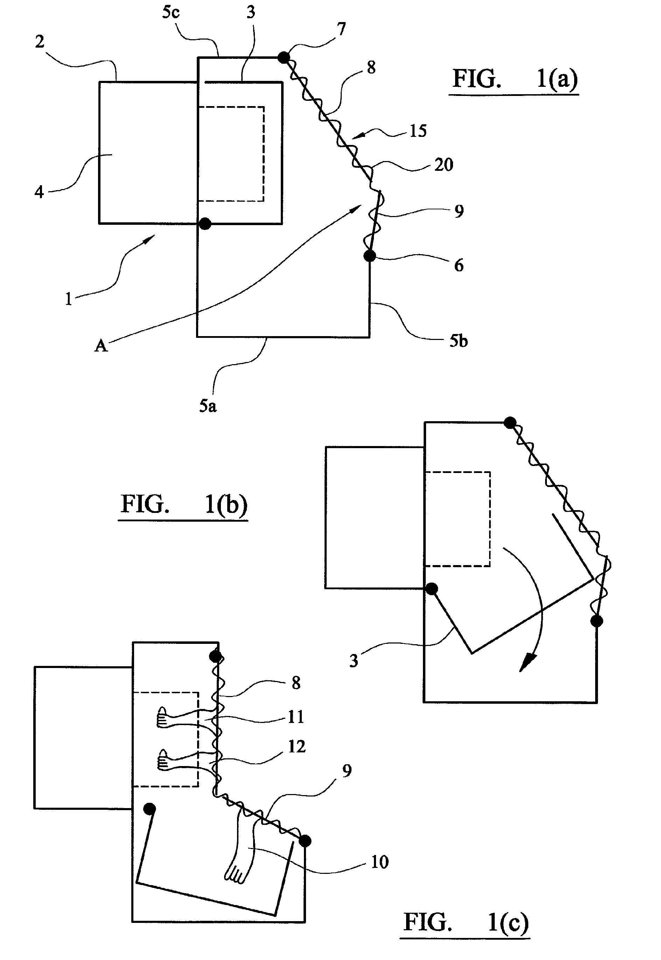

With reference to Figure 1a, there is illustrated schematically an embodiment of the containment assembly according to the invention. The containment assembly designated generally by reference numeral 1 comprises a large centrifuge 2 having an operating part 4 closed by door 3. Conventional powder handling takes place in the closed operating part 4 of the centrifuge 2. Positioned adjacent to the door 3 of the operating part 4 is an isolator 15 having a walled structure of a configuration suitable to define an enclosed processing zone A beyond the sheet 20 in which is located the door 3. The walled structure comprises a rigid framework of walls 5a, 5b and 5c to which is pivotally mounted (by hinges 6 and 7) a vertical edge of a first pivotally mounted framework 8 and of a second pivotally mounted framework 9.

As shown in Figure 1b, there is sufficient clearance in the processing zone A beyond pivotally mounted frameworks 8 and 9 to permit door 3 to be opened. Figure 1c illustrates how flexible gloved portions 10, 11 and 12 in the first and second pivotally mounted frameworks 8 and 9 are exploited with the first and second pivotally mounted frameworks 8 and 9 in (or near to) their innermost position to assist handling in the port 4 (*eg* powder removal) and in the rear face of door 3 (*eg* cleaning).

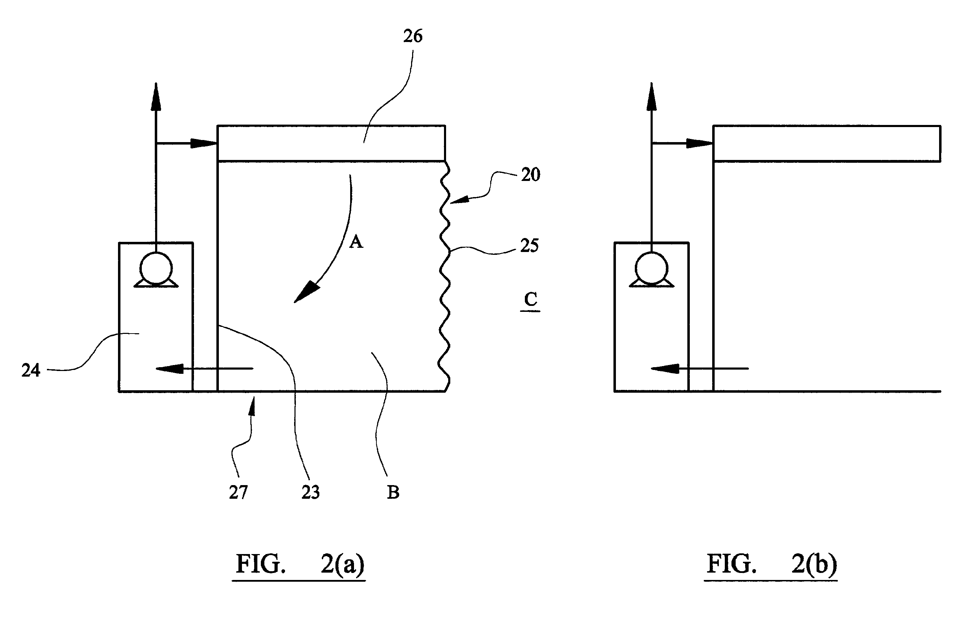

In the embodiment shown in side view in Figure 2a, an isolator 20 is positioned in a down flow powder handling booth 27 in which the extraction fans and filters (and other necessary components) 24 are located to the rear of a rear wall 23. A down flow of air (A) is generated by the clockwise circulatory action of the fans and filters 24 through celing 26 in the isolator 20.

The isolator 20 when placed against the rear wall 23 defines an enclosed processing zone B in which the desired operation is conducted (*eg* transferring powder from a bin to a weighing means - not shown). An operator positioned outside the processing zone B is able to operate within the processing zone B by manipulating the flexible part of the sheet 25 (not shown). The combined effect of the down flow air A and sheet 25 typically reduce exposure levels in the operator breathing zone (C) to less than 10µg/m³.

By detaching the framework 25, the containment assembly may be used in conventional down flow mode as shown in Figure 1b with full operator access.

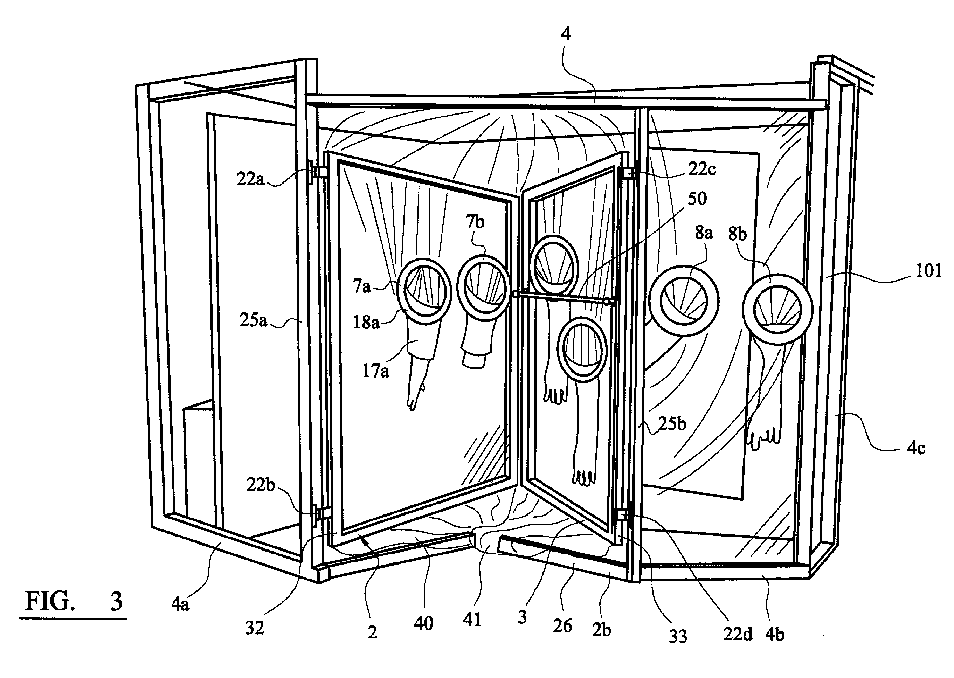

An embodiment of an isolator is illustrated in front view in Figure 3 and designated generally by reference numeral 1. The isolator 1 comprises a first pivotally mounted framework 2 and a second pivotally mounted framework 3, each of which is a planar (rectangular) framework of frame parts. For clarity the ceiling is omitted.

The isolator 1 is a framework structure comprising a plurality of frame parts arranged into a walled framework structure of enclosed walls 4, 4a, 4b and 4c. The enclosed wall 4b comprises a plurality of frame parts to which is sealingly fixed a part of the continuous flexible transparent polyurethane sheet 40. The enclosed wall 4 comprises a first and a second vertical frame part 25a and 25b connected by a lower horizontal, reentrant frame part 26 to which is sealingly fixed a part of the continuous flexible transparent polyurethane sheet 40. Each pivotally mounted framework 2 and 3 supports a part of the continuous flexible transparent polyurethane sheet 40 fixed across enclosed walls 4 and 4b. The excess material 41 permits pivoting of the first pivotally mounted framework 2 and the second pivotally mounted framework 3 between their innermost and outermost positions. The enclosed walls 4a and 4c comprise a plurality of frame parts bounding rigid material (see for example 101 in wall 4c).

Each of the first pivotally mounted framework 2 and the second pivotally mounted framework 3 is mounted in a reentrant manner along remote vertical edges 32 and 33 by two hinges 22a-d to the first and second vertical frame part 25a and 25b of enclosed wall 4. The pivotally mounted framework 3 is provided with a handle 50 to assist pivoting.

When placed against the wall of a centrifuge, the enclosed region defined by the isolator 1 is the processing zone. An operator positioned outside pivotally mounted frameworks 2 and 3 (and therefore externally to the processing zone) is able to carry out an operation within the processing zone by inserting each hand into a suitable one of the flexible sleeves terminating in gloved ends 7a, 7b, 7c and 7d on the part of the sheet 40 supported by pivotally mounted frameworks 2 and 3 (and the flexible sleeves terminating in gloved ends 8a and 8b on the part of the flexible sheet 40 supported by additional enclosed wall 4b). Each of the flexible sleeves terminating in gloved ends 7a, 7b, 7c, 7d, 8a and 8b is sufficiently flexible to permit all round articulation. The joint between the flexible sleeve and gloved end may be strengthened with an internal strengthening ring (17a for example) to which the ends of the gloved end and the flexible sleeve are secured by an elastic band. At the joint of the flexible sleeve and the remaining part of the pivotally mounted framework, there is a strengthening ring (18a for example). In use, the flexibility of the sleeves 7a, 7b, 7c and 7d is supplemented with the reach offered by the pivoting pivotally mounted frameworks 2 and 3 to improve access to and manoeuverability in the processing zone.

## Claims

1. A containment assembly comprising:
a powder handling apparatus; and
an isolator comprising (1) a sheet at least a first part of which is composed of flexible material and (2) a pivotally mounted framework capable of pivoting into each position in a pivoting range between an innermost position and an outermost position, said isolator being positioned adjacent to the powder handling apparatus or a part thereof to define a processing zone beyond the sheet in which is located the powder handling apparatus or a part thereof,
wherein the first part of the sheet is adapted (or is adaptable) to permit an operator outside the processing zone to reach into the processing zone, wherein the pivotally mounted framework is adapted to support the first part of the sheet at each position in the pivoting range.

2. A containment assembly as claimed in claim 1 wherein substantially the whole of the sheet is composed of flexible material.

3. A containment assembly as claimed in claim 1 or 2 wherein the isolator is a framework structure comprising a plurality of frame parts.

4. A containment assembly as claimed in claim 3 wherein the plurality of frame parts are arranged into a walled framework structure of enclosed walls.

5. A containment assembly as claimed in claim 4 wherein the pivotally mounted framework is pivotally mounted to a frame part of a first enclosed wall.

6. A containment assembly as claimed in claim 5 wherein the first enclosed wall comprises a first vertical frame part to which is mounted the pivotally mounted framework and a second vertical frame part connected thereto by an upper horizontal frame part and a lower horizontal frame part.

7. A containment assembly as claimed in claim 6 wherein the lower horizontal frame part is reentrant.

8. A containment assembly as claimed in any of claims 4 to 7 wherein the sheet is fixed to the frame parts of at least the first enclosed wall.

9. A containment assembly as claimed in any of claims 4 to 8 wherein the sheet is loosely fixed to the frame parts of the first enclosed wall so that there is excess flexible material to allow for pivoting of the pivotally mounted framework between the innermost and outermost position.

10. A containment assembly as claimed in any of claims 4 to 9 wherein the walled framework structure comprises the first enclosed wall and any number of additional enclosed walls.

11. A containment assembly as claimed in claim 10 wherein the or each additional enclosed wall comprises a plurality of frame parts supporting flexible or non-flexible material.

12. A containment assembly as claimed in claim 10 or 11 wherein at least one of the one or more additional enclosed walls comprises a plurality of frame parts supporting flexible material adapted (or adaptable) to permit the operator outside the processing zone to operate inside the processing zone.

13. A containment assembly as claimed in any of claims 10 to 12 wherein at least one of the one or more additional enclosed walls comprises a plurality of frame parts bounding rigid material incorporating one or more non-flexible transfer ports.

14. A containment assembly as claimed in any of claims 10 to 13 wherein the sheet is fixed to the frame parts of the first enclosed wall and to the frame parts of at least one of the one or more additional enclosed walls.

15. A containment assembly as claimed in claim 14 wherein the sheet is continuous across the first and at least one of the one or more additional enclosed walls.

16. A containment assembly as claimed in any preceding claim wherein the pivotally mounted framework is pivotally mounted along a substantially vertical edge.

17. A containment assembly as claimed in claim 16 wherein the pivotally mounted framework is pivotally mounted on a substantially vertical frame part of the framework structure.

18. A containment assembly as claimed in any preceding claim wherein the innermost position of the pivotally mounted framework is reentrant.

19. A containment assembly as claimed in any preceding claim wherein the pivotally mounted framework comprises a planar framework of frame parts which is adapted to support the first part of the sheet at each position in the pivoting range.

20. A containment assembly as claimed in any preceding claim wherein the isolator comprises:
a first pivotally mounted framework capable of pivoting into each position in a first pivoting range between an innermost position and an outermost position; and
a second pivotally mounted framework capable of pivoting into each position in a second pivoting range between an innermost position and an outermost position,
wherein each of the first pivotally mounted framework and the second pivotally mounted framework is adapted to support the first part of the sheet at each position in the first and second pivoting range respectively.

21. A containment assembly as claimed in claim 20 wherein the first pivotally mounted framework and the second pivotally mounted framework are pivotal in opposite senses.

22. A containment assembly as claimed in claim 20 or 21 wherein the first pivotally mounted framework and the second pivotally mounted framework are pivotally mounted along remote substantially vertical edges.

23. A containment assembly as claimed in any of claims 20 to 22 wherein the innermost position of each of the first pivotally mounted framework and the second pivotally mounted framework is reentrant.

24. A containment assembly as claimed in any of claims 20 to 23 wherein each of the first pivotally mounted framework and the second pivotally mounted framework is pivotally mounted on a first and second vertical frame part respectively, wherein said first and second vertical frame part are connected by an upper horizontal frame part and a lower horizontal frame part.

25. A containment assembly as claimed in claim 24 wherein the lower horizontal frame part is reentrant.

26. A containment assembly as claimed in any preceding claim wherein the first part of the sheet comprises one (or more than one) flexible portion in the shape of a glove (or one (or more than one) flexible portion capable of being deformed into the shape of a glove).

27. A containment assembly as claimed in any preceding claim wherein the sheet is detachably mounted.

28. A containment assembly as claimed in any preceding claim wherein the powder handling apparatus is a centrifuge containing one or more operating parts, wherein the isolator is positioned adjacent to the centrifuge to define a processing zone beyond the sheet in which is located the one or more operating parts.

29. A containment assembly as claimed in any of claims 1 to 27 wherein the powder handling apparatus is a powder drum or keg.

30. An isolator as defined in any preceding claim.
